# EUROPEAN PATENT SPECIFICATION

(11) **EP 1 700 775 B1**
(45) Date of publication and mention of the grant of the patent: **25.04.2007**
(21) Application number: 05005153.1
(22) Date of filing: 09.03.2005
(51) Int. Cl.: B62D 21/12, A61G 5/04

(54) **Modular type motor-driven vehicle**
Kraftfahrzeug in Modulbauweise
Véhicule à moteur en construction modulaire

(43) Date of publication of application: 13.09.2006
(73) Proprietor: Kwang Yang Motor Co., Ltd., San-Min Dist., Kaohsiung City (TW)
(72) Inventor: Lin, Tsang-Mao, Kaohsiung City Taiwan (TW); Chen, Jui-Tien, Kaohsiung City Taiwan (TW)
(74) Representative: UEXKÜLL & STOLBERG

(56) References cited:
- EP-A- 1 440 866
- US-A- 5 036 938
- US-B1- 6 439 331
- US-B1- 6 530 446
- PATENT ABSTRACTS OF JAPAN vol. 2000, no. 19, 5 June 2001 (2001-06-05) -& JP 2001 029397 A (ARACO CORP), 6 February 2001 (2001-02-06)

## Description

This invention relates to a motor-driven vehicle, and more particularly to a modular type motor-driven vehicle.

The document JP2001029397 discloses a modular type motor-driven vehicle including: a front vehicle frame having left and right sides; a rear vehicle frame having left and right sides; and a positioning unit for aligning the left and right sides of the front vehicle frame respectively with the left and right sides of the rear vehicle frame; the vehicle further including: a front vehicle body shell covering and disposed fixedly on the front vehicle frame; a rear vehicle body shell covering and disposed fixedly on the rear vehicle frame, wherein the front vehicle frame and the front vehicle body shell constitute cooperatively a front half module; a seat disposed fixedly on the rear vehicle frame; a driving unit disposed between the rear vehicle frame and the rear vehicle body shell so that the rear vehicle frame, the rear vehicle body shell and the driving unit constitute cooperatively a rear half module; and a retainer unit including: an engaging member connected fixedly to a rear end of the front half module, a hook member connected rotatably to the front end of the rear half module, and a handle unit disposed on the rear half module and operable so as to disengage the hook member from the engaging member, thereby allowing for removal of the front half module from the rear half module.

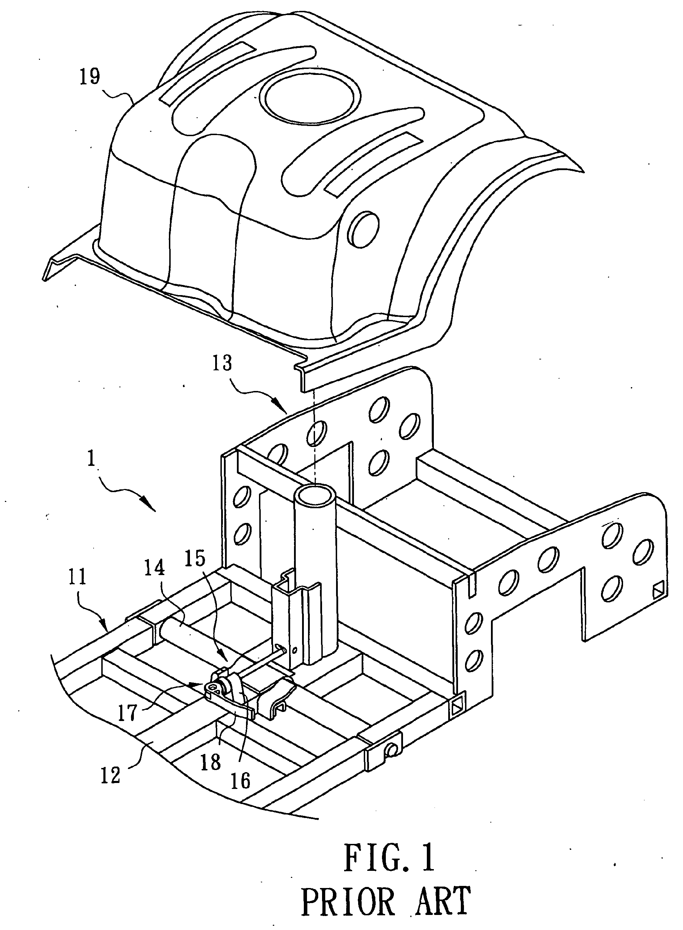

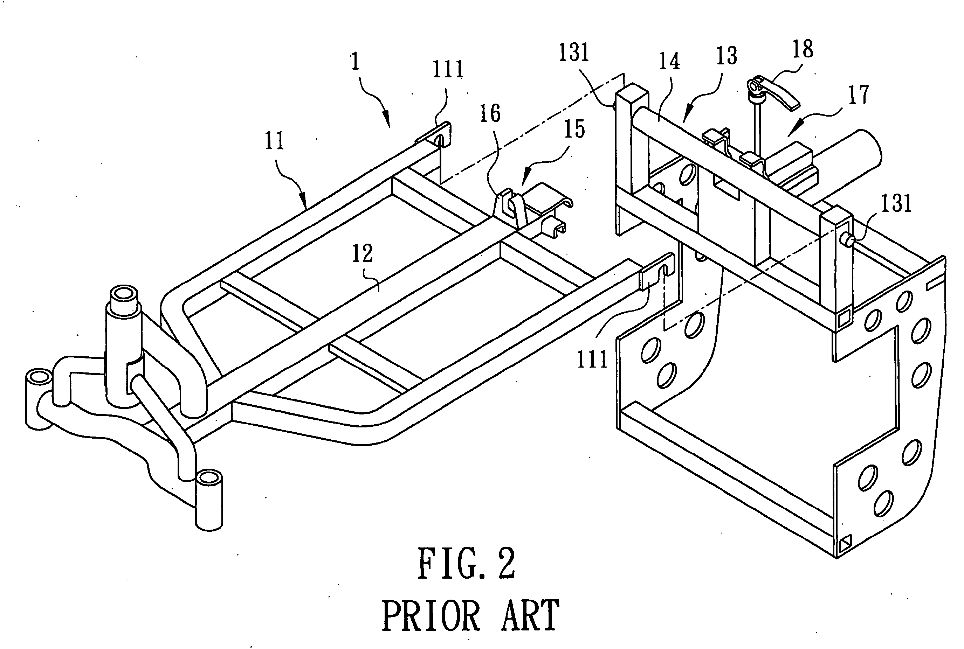

Referring to Figs. 1 and 2, a conventional modular type motor-driven vehicle 1 includes a front vehicle frame 11 with a central rod 12, a rear vehicle frame 13 with a transverse rod 14, an engaging member 15 disposed fixedly on a rear end of the front vehicle frame 11, a U-shaped bracket 16 disposed fixedly on the engaging member 15, and a retainer unit 17 with a quick release latch 18 disposed on the rear vehicle frame 13 and extending through the U-shaped bracket 16 for locking the front vehicle frame 11 to the rear vehicle frame 13.

During assembly, the front and rear vehicle frames 11, 13 are initially oriented as shown in Fig. 2. Two inverted U-shaped lugs 111 of the front vehicle frame 11 are moved to engage respectively two projecting rods 131 of the rear vehicle frame 13. This results in engagement between the transverse rod 14 and the engaging member 15. Subsequently, the rear vehicle frame 13 is rotated about the transverse rod 14 in a counterclockwise direction so as to engage the quick release latch 18 within the U-shaped bracket 16. At this time, the quick release latch 18 can be operated to lock the front vehicle frame 11 on the rear vehicle frame 13, as shown in Fig. 1.

The conventional modular type motor-driven vehicle 1 suffers from the following disadvantages:
(1) A vehicle body shell 19 and wirings need to be removed from the front and.rear vehicle frames 11, 13 prior to disassembly of the motor-driven vehicle 1. This results in a troublesome disassembly process.
(2) During assembly, it is difficult to rotate the rear vehicle frame 13 about the transverse rod 14.

The object of this invention is to provide a modular type motor-driven vehicle that can be assembled and disassembled easily and conveniently.

This object is achieved by means of a modular type motor driven vehicle with the features of claim 1.

According to this invention, a modular type motor-driven vehicle includes a front half module, a rear half module and a retainer unit. The front half module includes a front vehicle frame, a front vehicle body shell disposed fixedly on the front vehicle frame, and a seat disposed fixedly on the front vehicle body shell. The rear half module includes a rear vehicle frame, a rear vehicle body shell disposed fixedly on the rear vehicle frame, and a driving unit disposed between the rear vehicle frame and the rear vehicle body shell. The retainer unit includes an engaging member connected fixedly to the front half module, a handle unit disposed on the rear half module, a hook member disposed on the rear vehicle frame and biased to engage the engaging member so as to retain the front half module on the rear half module. The handle unit is operable so as to disengage the hook member from the engaging member, thereby allowing for removal of the front half module from the rear half module. Thereafter, when the handle unit is released, the hook member is biased to engage the engaging member. As such, the modular type motor-driven vehicle can be assembled and disassembled easily and conveniently.

These and other features and advantages of this invention will become apparent in the following detailed description of a preferred embodiment of this invention, with reference to the accompanying drawings, in which:
Fig. 1 is a partly exploded fragmentary perspective view of a conventional modular type motor-driven vehicle, a front vehicle frame being connected to a rear vehicle frame;
Fig. 2 is a partly exploded fragmentary perspective view of the conventional modular type motor-driven vehicle, the front vehicle frame being disconnected from the rear vehicle frame;
Fig. 3 is a partly exploded fragmentary perspective view of the preferred embodiment of a modular type motor-driven vehicle according to this invention;
Fig. 4 is an assembled fragmentary perspective view of the preferred embodiment, illustrating how a front vehicle frame is retained on a rear vehicle frame by a retainer unit;
Fig. 4A is a perspective view of an engaging member of the preferred embodiment;
Fig. 4B is a fragmentary sectional view of the engaging member and a front upright rod of the preferred embodiment;
Fig. 4C is a perspective view of a hook member of the preferred embodiment;
Fig. 4D is a fragmentary perspective view of the preferred embodiment, illustrating engagement of the hook member and the engaging member;
Fig. 5 is a schematic view of the retainer unit of the preferred embodiment, illustrating how the hook member is disengaged from the engaging member;
Fig. 6 is a schematic view of the retainer unit of the preferred embodiment, illustrating how the hook member is engaged with the engaging member;
Fig. 7 is an exploded perspective view of front and rear half modules of the preferred embodiment, in which a seat is removed for better illustration; and
Figs. 8A, 8B, and 8C illustrate how the hook member is guided to engage the engaging member.

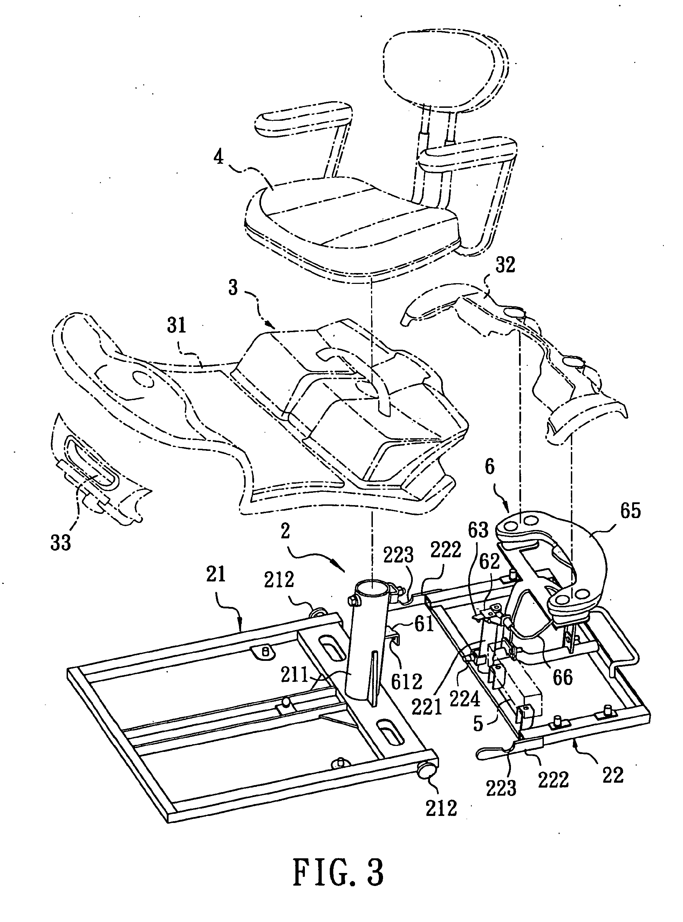

Referring to Figs. 3, 4 and 7, the preferred embodiment of a modular type motor-driven vehicle according to this invention includes a vehicle frame unit 2, a vehicle body shell unit 3, a seat 4, a driving unit 5, and a retainer unit 6. The vehicle frame unit 2 includes front and rear vehicle frames 21, 22. The vehicle body shell unit 3 includes a front vehicle body shell 31 covering and disposed fixedly on the front vehicle frame 21, and a rear vehicle body shell 32 covering and disposed fixedly on the rear vehicle frame 22. The front vehicle body shell 21 is formed with a fixed grip 33.

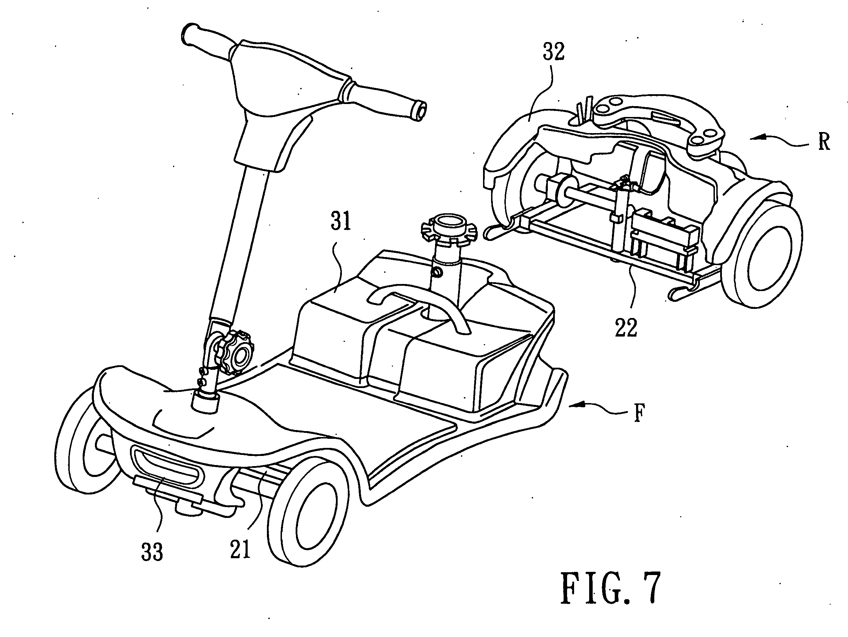

The front vehicle frame 21 includes a fixed front upright rod 211 that extends upwardly from a rear end thereof and through the front vehicle body shell 31 and that has an upper end, which supports the seat 4 thereon. The rear vehicle frame 22 includes a fixed rear upright rod 221 at a front end thereof. The front vehicle frame 21, the front vehicle body shell 31 and the seat 4 constitute cooperatively a front half module (F) (see Fig. 7). The driving unit 5 is disposed between the rear vehicle frame 22 and the rear vehicle body shell 32. The rear vehicle frame 22, the rear vehicle body shell 32 and the driving unit 5 constitute cooperatively a rear half module (R) (see Fig. 7).

A positioning unit includes two positioning projections 212 and two elongated vertical guiding strips 222. The guiding strips 222 extend respectively and forwardly from and are connected fixedly to left and right sides of the rear vehicle frame 22. Each of the guiding strips 222 has a top side that is formed with a notch 223. The positioning projections 212 extend respectively and outwardly from left and right sides of the front vehicle frame 21 away from each other and through the notches 223 in the guiding strips 222. With the positioning unit disposed between the front and rear half modules (F, R), the left and right sides of the front half module (F) are aligned respectively with those of the rear half module (R).

An adjustment bolt 224 is disposed rotatably on the rear upright rod 221, and is adjustable to press against the front upright rod 211.

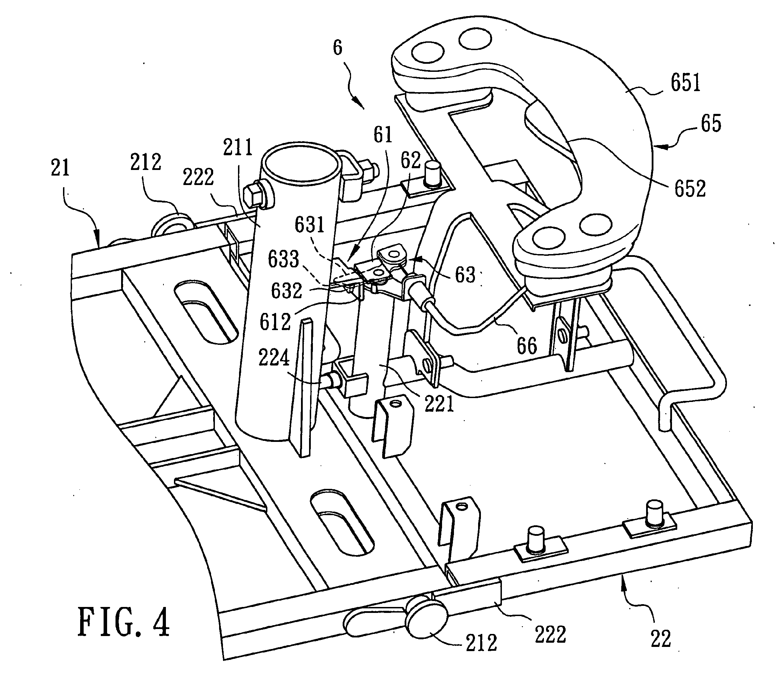

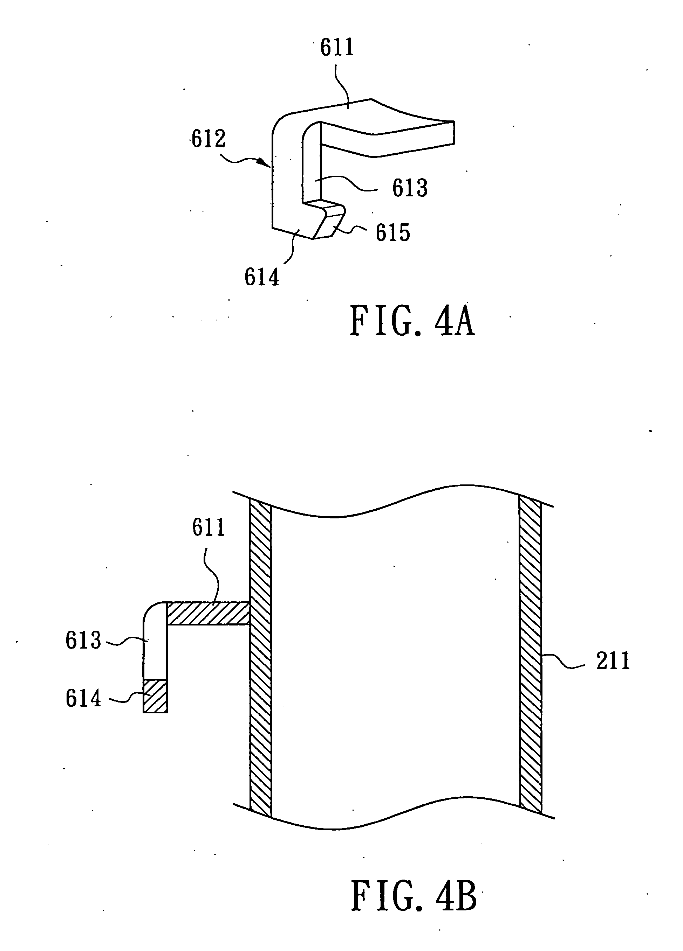

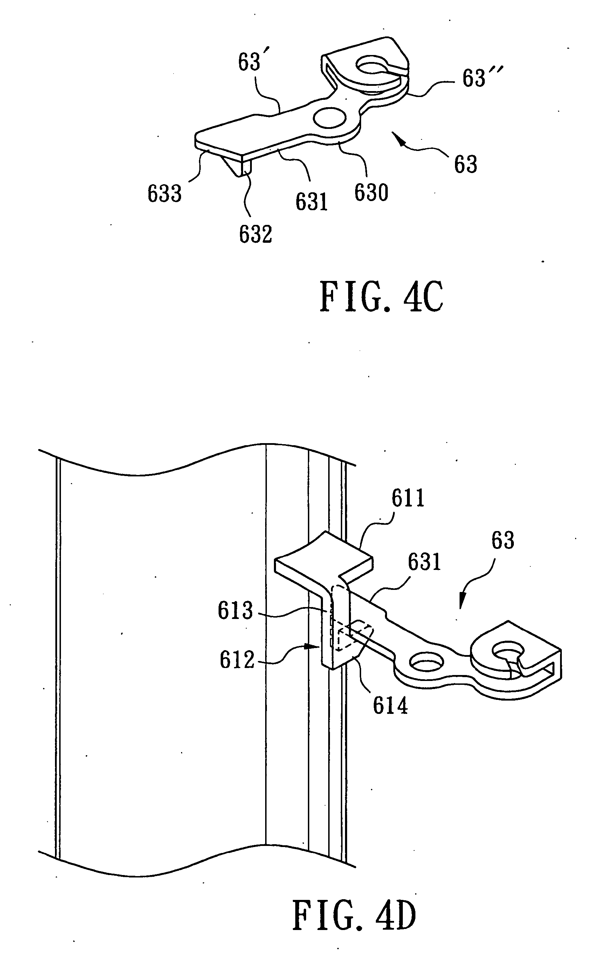

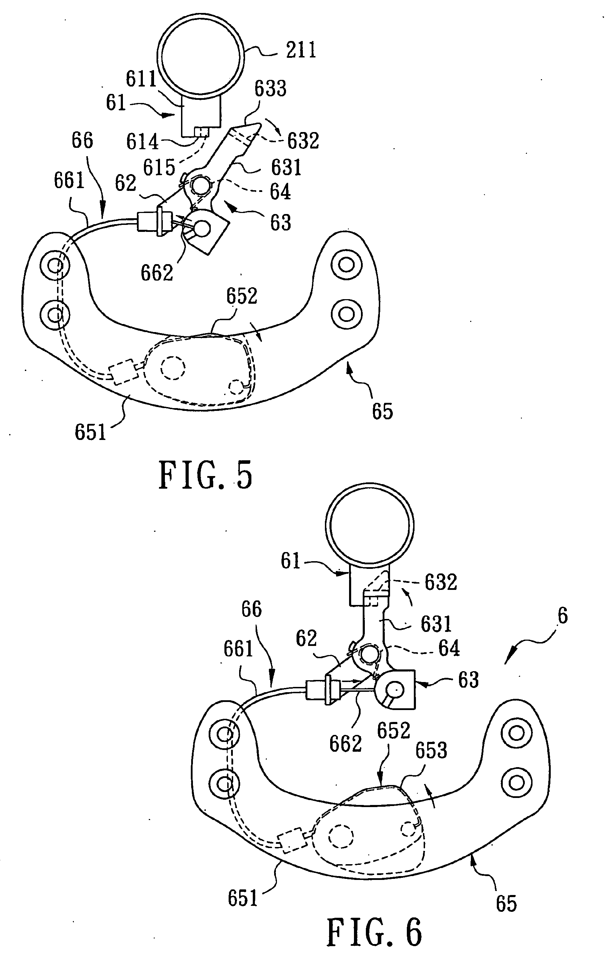

The retainer unit 6 includes an engaging member 61, a supporting plate 62, a hook member 63, a torsional spring 64 (see Figs. 5 and 6), a handle unit 65 and a control cable 66. Referring to Figs. 4A and 4B, the engaging member 61 includes a horizontal plate 611 connected fixedly to the front upright rod 211, and an L-shaped rod 612. The L-shaped rod 612 has an upright rod portion 613 connected fixedly to the horizontal plate 611 at an upper end thereof, and a horizontal rod portion 614 extending integrally from a lower end of the upright rod portion 613. The horizontal rod portion 614 has an end surface that has an inclined guiding surface portion 615. The supporting plate 62 is connected fixedly to an upper end of the rear upright rod 221. Referring to Figs. 3, 4, 4C, 4D, 5, 6 and 7, the hook member 63 has a first swing arm 63' (see Fig. 4C), a second swing arm 63" (see Fig. 4C), and a pivot portion 630 (see Fig. 4C) formed integrally with the first and second swing arms 63', 63" and connected pivotally to the supporting plate 62. The first swing arm 63' has an inclined plate portion 631 and an insert portion 632. The inclined plate portion 631 extends forwardly and downwardly from the pivot portion 630 into a space between the horizontal plate 611 and the horizontal rod portion 614 of the L-shaped rod 612, and has an inclined engaging side 633. The insert portion 632 extends integrally and downwardly from a lower end of the inclined plate portion 631, and is biased by the torsional spring 64 to extend into a limiting space between the horizontal rod portion 614 and the front upright rod 211. Therefore, rearward removal of the rear half module (R) from the front half module (F) can be prevented.

The handle unit 65 includes a hollow handle body 651 disposed fixedly on the rear vehicle frame 22, and a controlling member 652 disposed swingably within the handle body 651. The control cable 66 includes a tubular outer cable portion 661 and an inner cable portion 662 extending through and disposed movably within the outer cable portion 661. The outer cable portion 661 has two ends that are fastened respectively to the supporting plate 62 and the handle body 651. The inner cable portion 662 has two ends that are fastened respectively to the second swing arm 63" of the hook member 63 and the controlling member 652. The controlling member 652 has an extended portion 653 (see Fig. 6) that is biased by the torsional spring 64 to project outwardly from the handle body 651, as shown in Fig. 6, when the hook member 63 engages the engaging member 61. The extended portion 653 of the controlling member 652 can be pressed so as to disengage the first swing arm 63' of the hook member 63 from the engaging member 61, as shown in Fig. 5. This allows for removal of the first and second half modules (F, R) from each other. At this time, when the extended portion 653 of the controlling member 652 is released, the hook member 63 is biased by the torsional spring 64 to engage the engaging member 61.

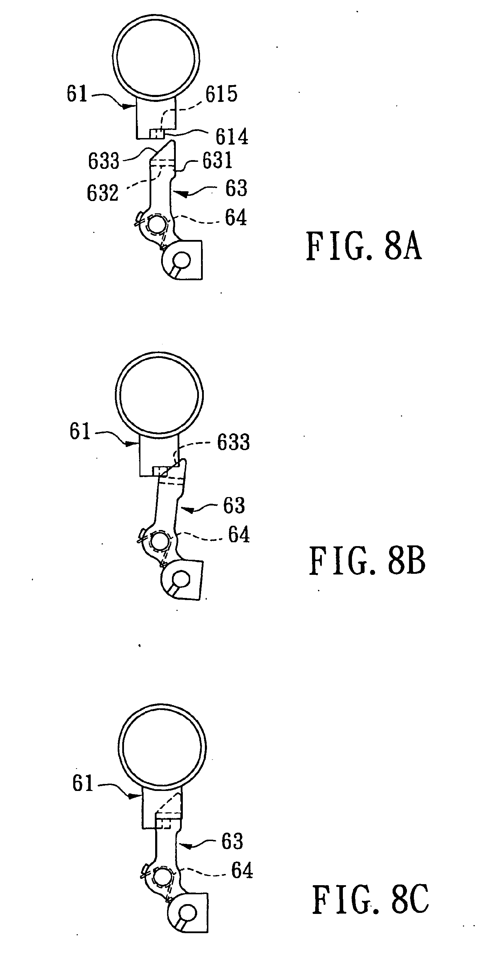

During assembly, the inclined engaging side 633 of the inclined plate portion 631 of the hook member 63 is biased by the torsional spring 64 to engage the inclined guiding surface portion 615 of the L-shaped rod 612 of the engaging member 61, as shown in Fig. 8B. Therefore, the insert portion 632 of the hook member 63 can be guided into the limiting space between the horizontal rod portion 614 and the front upright rod 211.

The modular type motor-driven vehicle of this invention has the following advantages:
(1) When the positioning projections 212 of the front vehicle frame 21 are engaged within the notches 223 in the guiding strips 222 of the rear vehicle frame 22, the hook member 63 is biased to engage the engaging member 61. When the hook member 63 pivots from the position shown in Fig. 8A to that shown in Fig. 8B, the inclined engaging side 633 of the inclined plate portion 631 engages the inclined guiding surface portion 615 of the L-shaped rod 612. As such, the hook member 63 is guided by the inclined guiding surface portion 615 to the position shown in Fig. 8C so as to engage the engaging member 61. This simplifies the assembly process of the vehicle of this invention.
(2) After assembly, the adjustment bolt 224 can be adjusted so as to press the hook member 63 against the L-shaped rod 612. This results in a secure connection between the front and rear half modules (F, R).
(3) In order to disconnect the front and rear half modules (F, R) from each other, it is only necessary to press the controlling member 652. This simplifies the disassembly process of the vehicle of this invention.
(4) During assembly, the handle body 651 and the grip 33 can be held conveniently to move the front and rear half modules (F, R).
(5) There is no need for the rearrangement of wirings on the vehicle of this invention during assembly and disassembly. This results in quick assembly and disassembly of the vehicle.

## Claims

1. A modular type motor-driven vehicle including:
a front vehicle frame (21) having left and right sides;
a rear vehicle frame (22) having left and right sides; and
a positioning unit for aligning the left and right sides of the front vehicle frame (21) respectively with the left and right sides of the rear vehicle frame (22);
a front vehicle body shell (31) covering and disposed fixedly on the front vehicle frame (21);
a rear vehicle body shell (32) covering and disposed fixedly on the rear vehicle frame (22);
a seat (4) disposed fixedly on the front vehicle body shell (31) so that the front vehicle frame (21), the front vehicle body shell (31) and the seat (4) constitute cooperatively a front half module (F);
a driving unit (5) disposed between the rear vehicle frame (22) and the rear vehicle body shell (32) so that the rear vehicle frame (22), the rear vehicle body shell (32) and the driving unit (5) constitute cooperatively a rear half module (R); and
a retainer unit (6) including
an engaging member (61) connected fixedly to a rear end of the front half module (F),
a hook member (63) connected rotatably to the front end of the rear half module (R) and biased to engage the engaging member (61) so as to retain the front half module (F) on the rear half module (R), and
a handle unit (65) disposed on the rear half module (R) and operable so as to disengage the hook member (63) from the engaging member (61), thereby allowing for removal of the front half module (F) from the rear half module (R);
wherein the handle unit (65) includes a hollow handle body (651) disposed fixedly on the rear vehicle frame (22), and a controlling member (652) disposed swingably within the handle body (651) and having an extended portion (653) that is biased by the torsional spring (64) to project outwardly from the handle body (651) and that is pressable so as to disengage the first swing arm (63') of the hook member (63) from the engaging member (61);
wherein the hook member (63) has a first swing arm (63'), a second swing arm (63"), and a pivot portion (630) formed integrally with the first and second swing arms (63', 63") and connected pivotally to the rear half module (R), the retainer unit (6) further including a torsional spring (64) for biasing the first swing arm (63') of the hook member (63) to engage the engaging member (61), and a control cable (66) having two ends that are fastened respectively to the second swing arm (63") of the hook member (63) and the handle unit (65);
wherein the control cable (66) includes a tubular outer cable portion (661) and an inner cable portion (662) extending through and disposed movably within the outer cable portion (661), the outer cable portion (661) having two ends that are fastened respectively to the rear upright rod (221) and the handle body (651), the inner cable portion (662) having two ends that are fastened respectively to the second swing arm (63") of the hook member (63) and the controlling member (652).

2. The modular type motor-driven vehicle as claimed in Claim 1, **characterized in that** the front vehicle frame (21) includes a fixed front upright rod (211) that extends upwardly through the front vehicle body shell (31) and that has an upper end which supports the seat (4) thereon, and the rear vehicle frame (22) includes a fixed rear upright rod (221), the engaging member (61) being connected fixedly to the front upright rod (211), the hook member (63) being connected rotatably to the rear upright rod (221).

3. The modular type motor-driven vehicle as claimed in Claim 2, further comprising an adjustment bolt (224) that is disposed rotatably on the rear upright rod (221) and that is adjustable to press against the front upright rod (211).

4. The modular type motor-driven vehicle as claimed in Claim 1, further **characterized in that** the front vehicle frame (21) includes a fixed front upright rod (211) that extends upwardly through the front vehicle body shell (31) and that has an upper end which supports the seat (4) thereon, and the rear vehicle frame (22) includes a fixed rear upright rod (221), the engaging member (61) including a horizontal plate (611) connected fixedly to the front upright rod (211), and an L-shaped rod (612), the L-shaped rod (612) having an upright rod portion (613) connected fixedly to the horizontal plate (611) at an upper end thereof, and a horizontal rod portion (614) extending integrally from a lower end of the upright rod portion (613), the first swing arm (63') of the hook member (63) having an inclined plate portion (631) that extends forwardly and downwardly from the pivot portion (630) into a space between the horizontal plate (611) and the horizontal rod portion (614) of the L-shaped rod (612), and an insert portion (632) that extends integrally and downwardly from a lower end of the inclined plate portion (631) and that is biased to extend into a limiting space between the horizontal rod portion (614) of the engaging member (61) and the front upright rod (211) so as to prevent rearward removal of the rear half module (R) from the front half module (F).

5. The modular type motor-driven vehicle as claimed in Claim 4, further **characterized in that** the horizontal rod portion (614) of the L-shaped rod (612) of the engaging member (61) has an end surface that has an inclined guiding surface portion (615), the inclined plate portion (631) of the hook member (63) having an inclined engaging side (633) that is biased to engage the inclined guiding surface portion (615) of the horizontal rod portion (614) so that the inclined guiding surface portion (615) guides the insert portion (632) of the hook member (63) into the limiting space during assembly.

6. The modular type motor-driven vehicle as claimed in Claim 1, **characterized in that** the positioning unit includes:
two elongated vertical guiding strips (222) extending respectively and forwardly from and connected fixedly to the left and right sides of the rear vehicle frame (22), each of the guiding strips (222) having a top side that is formed with a notch (223); and
two positioning projections (212) extending respectively and outwardly from the left and right sides of the front vehicle frame (21) away from each other and through the notches (223) in the guiding strips (222).

7. The modular type motor-driven vehicle as claimed in Claim 1, **characterized in that** the front vehicle body shell (31) is formed with a fixed grip (33).

## Patentansprüche

1. Kraftfahrzeug in Modulbauweise mit:
Einem vorderen Fahrzeugrahmen (21) mit einer rechten und einer linken Seite;
einem hinteren Fahrzeugrahmen (22) mit einer rechten und einer linken Seite; und
einer Positioniereinheit zum Ausrichten der linken und rechten Seiten des vorderen Fahrzeugrahmens (21) jeweils mit den linken und rechten Seiten des hinteren Fahrzeugrahmens (22);
einem vorderen Fahrzeuggehäusekörper (31), der fest an dem vorderen Fahrzeugrahmen (21) angeordnet ist und diesen bedeckt;
einem hinteren Fahrzeuggehäusekörper (32), der fest an dem hinteren Fahrzeugrahmen (22) angeordnet ist und diesen bedeckt;
einem Sitz (4), der fest an dem vorderen Fahrzeuggehäusekörper (31) angeordnet ist, so dass der vordere Fahrzeugrahmen (21), der vordere Fahrzeuggehäusekörper (31) und der Sitz (4) in Zusammenwirkung ein vorderes Halbmodul (F) bilden;
einer Antriebseinheit (5), die zwischen dem hinteren Fahrzeugrahmen (22) und dem hinteren Fahrzeuggehäusekörper (32) angeordnet ist, so dass der hintere Fahrzeugrahmen (22), der hintere Fahrzeuggehäusekörper (32) und die Antriebseinheit (5) in Zusammenwirkung ein hinteres Halbmodul (R) bilden; und
einer Halterungseinheit (6), die
ein Eingriffsteil (61), das fest an,einem hinteren Ende des vorderen Halbmoduls (F) befestigt ist,
ein Hakenteil (63), das drehbar mit dem vorderen Ende des hinteren Halbmoduls (R) verbunden ist und mit einer Vorspannung zum Eingreifen mit dem Eingriffsteil (61) versehen ist, um so das vordere Halbmodul (F) an dem hinteren Halbmodul (R) zu halten, und
eine Griffeinheit (65) aufweist, die an dem hinteren Halbmodul (R) angeordnet ist und dazu zu betätigen ist, das Hakenteil (63) von dem Eingriffsteil (61) zu lösen, wodurch die Entfernung des vorderen Halbmoduls (F) von dem hinteren Halbmodul (R) ermöglicht wird;
wobei die Griffeinheit (65) einen hohlen Griffkörper (651), der fest an dem hinteren Fahrzeugrahmen (22) angeordnet ist, und ein Steuerteil (652) umfasst, das schwenkbar in dem Griffkörper (651) angeordnet ist und einen ausgedehnten Bereich (653) hat, der durch die Torsionsfeder (64) vorgespannt wird, um nach außen von dem Griffkörper (651) vorzustehen, und der drückbar ist, um so den ersten Schwenkarm (63') des Hakenteils (63) von dem Eingriffsteil (61) zu lösen;
wobei das Hakenteil (63) einen ersten Schwenkarm (63'), einen zweiten Schwenkarm (63") und einen Drehbereich (630) hat, der einstückig mit den ersten und zweiten Schwenkarmen (63', 63'') ist und drehbar mit dem hinteren Halbmodul (R) verbunden ist, wobei die Halterungseinheit (6) weiter eine Torsionsfeder (64) zum Vorspannen des ersten Schwenkarms (63') des Hakenteils (63) aufweist, um mit dem Eingriffsteil (61) einzugreifen, und einen Steuerzug (66) mit zwei Enden umfasst, die mit dem zweiten Schwenkarm (63") des Hakenteils (63) beziehungsweise mit der Griffeinheit (65) verbunden sind;
wobei der Steuerzug (66) ein röhrenförmiges äußeres Zugteil (661) und ein inneres Zugteil (662) aufweist, das durch das äußere Zugteil (661) hindurch verläuft und darin beweglich angeordnet ist, wobei das äußere Zugteil (661) zwei Enden hat, die an der hinteren aufrechten Stange (221) beziehungsweise an dem Griffkörper (651) befestigt sind, wobei das innere Zugteil (662) zwei Enden hat, die an dem zweiten Schwenkarm (63") des Hakenteils (63) beziehungsweise an dem Steuerteil (652) befestigt sind.

2. Kraftfahrzeug in Modulbauweise nach Anspruch 1, **dadurch gekennzeichnet, dass** der vordere Fahrzeugrahmen (21) eine befestigte vordere, aufrechte Stange (211) umfasst, die sich nach oben durch den vorderen Fahrzeuggehäusekörper (31) erstreckt und die ein oberes Ende hat, das den Sitz (4) darauf trägt, und dass der hintere Fahrzeugrahmen (22) eine befestigte, hintere aufrechte Stange (221) umfasst, wobei das Eingriffsteil (61) fest an der vorderen aufrechten Stange (211) befestigt ist, wobei das Hakenteil (63) drehbar an der hinteren aufrechten Stange (221) befestigt ist.

3. Kraftfahrzeug in Modulbauweise nach Anspruch 2, das weiter einen Einstellbolzen (224) aufweist, der drehbar an der hinteren aufrechten Stange (221) angeordnet ist und der einstellbar ist, um gegen die vordere aufrechte Stange (211) zu drücken.

4. Kraftfahrzeug in Modulbauweise nach Anspruch 1, weiter **dadurch gekennzeichnet, dass** der vordere Fahrzeugrahmen (21) eine befestigte, vordere aufrechte Stange (211) umfasst, die nach oben durch den vorderen Fahrzeuggehäusekörper (31) hindurch verläuft und ein oberes Ende hat, das den Sitz (4) darauf trägt, und dass der hintere Fahrzeugrahmen (22) eine befestigte, hintere aufrechte Stange (221) umfasst, wobei das Eingriffsteil (61) eine horizontale Platte (611), die fest mit der vorderen aufrechten Stange (211) verbunden ist, und eine L-förmige Stange (612) aufweist, wobei die L-förmige Stange (612) einen aufrechten Stangenabschnitt (613) hat, der fest mit der horizontalen Platte (611) an einem oberen Ende davon verbunden ist, und einen horizontalen Stangenbereich (614) hat, der in einem Stück von einem unteren Ende des aufrechten Stangenbereichs (613) ausgeht, wobei der erste Schwenkarm (63') des Hakenteils (63) einen geneigten Plattenbereich (631) hat, der nach vorne und nach unten von dem Drehbereich (630) in einen Raum zwischen der horizontalen Platte (611) und dem horizontalen Stangenbereich (614) der L-förmigen Stange (612) verläuft, und einen Einsatzbereich (632) aufweist, der in einem Stück und nach unten von einem unteren Ende des geneigten Plattenbereichs (631) ausgeht und vorgespannt ist, um sich in einen Begrenzungsraum zwischen dem horizontalen Stangenbereich (614) des Eingriffsteils (61) und der vorderen aufrechten Stange (211) zu erstrecken, um so eine rückwärts gerichtete Entfernung des hinteren Halbmoduls (R) von dem vorderen Halbmodul (F) zu verhindern.

5. Kraftfahrzeug in Modulbauweise nach Anspruch 4, weiter **dadurch gekennzeichnet, dass** der horizontale Stangenbereich (614) der L-förmigen Stange (612) des Eingriffsteils (61) eine Endfläche hat, die einen geneigten Führungsflächenbereich (615) hat, wobei der geneigte Plattenbereich (631) des Hakenteils (63) eine geneigte Eingriffsseite (633) hat, die vorgespannt ist, um mit dem geneigten Führungsflächenbereich (615) des horizontalen Stangenbereichs (614) einzugreifen, so dass der geneigte Führungsflächenbereich (615) den Einsatzbereich (632) des Hakenteils während des Zusammenbaus in den Begrenzungsraum führt.

6. Kraftfahrzeug in Modulbauweise nach Anspruch 1, **dadurch gekennzeichnet, dass** die Positioniereinheit aufweist:
Zwei längliche vertikale. Führungsstreifen (222), die von der linken und der rechten Seite des hinteren Fahrzeugrahmens (22) ausgehen und sich nach vorne erstrecken und mit der linken und rechten Seite fest verbunden sind, wobei jeder der Führungsstreifen (222) eine Oberseite hat, die mit einer Einkerbung (223) ausgestaltet ist; und
zwei Positionierungsvorsprünge (212), die von der linken und der rechten Seite des vorderen Fahrzeugrahmens (21) ausgehen und nach außen voneinander weg und durch die Einkerbungen (223) in den Führungsstreifen (222) verlaufen.

7. Kraftfahrzeug in Modulbauweise nach Anspruch 1, **dadurch gekennzeichnet, dass** der vordere Fahrzeuggehäusekörper (31) mit einem befestigten Griff (33) ausgebildet ist.

## Revendications

1. Véhicule entraîné par moteur de type modulaire, comportant :
un châssis de véhicule avant (21) ayant des côtés gauche et droit,
un châssis de véhicule arrière (22) ayant des côtés gauche et droit, et
une unité de positionnement pour aligner les côtés gauche et droit du châssis de véhicule avant (21) respectivement avec les côtés gauche et droit du châssis de véhicule arrière (22),
une caisse de carrosserie de véhicule avant (31) recouvrant le châssis de véhicule avant (21), et disposée de manière fixe sur celui-ci,
une caisse de carrosserie de véhicule arrière (32) recouvrant le châssis de véhicule arrière (22), et disposée de manière fixe sur celui-ci,
un siège (4) disposé de manière fixe sur la caisse de carrosserie de véhicule avant (31), de sorte que le châssis de véhicule avant (21), la caisse de carrosserie de véhicule avant (31) et le siège (4) constituent en coopération un demi-module avant (F),
une unité d'entraînement (5) disposée entre le châssis de véhicule arrière (22) et la caisse de carrosserie de véhicule arrière (32), de sorte que le châssis de véhicule arrière (22), la caisse de carrosserie de véhicule arrière (32) et l'unité d'entraînement (5) constituent en coopération un demi-module arrière (R), et
une unité de retenue (6), comportant
un élément de mise en prise (61) relié de manière fixe à une extrémité arrière du demi-module avant (F),
un élément formant crochet (63) relié de manière rotative à l'extrémité avant du demi-module arrière (R), et rappelé pour venir en prise avec l'élément de mise en prise (61) afin de retenir le demi-module avant (F) sur le demi-module arrière (R), et
une unité formant poignée (65) disposée sur le demi-module arrière (R) et fonctionnelle afin de libérer l'élément formant crochet (63) de l'élément de mise en prise (61), en permettant ainsi d'enlever le demi-module avant (F) du demi-module arrière (R),
dans lequel l'unité formant poignée (65) comporte un corps de poignée creux (651) disposé de manière fixe sur le châssis de véhicule arrière (22), et un élément de commande (652) disposé de manière oscillante dans le corps de poignée (651) et ayant une partie étendue (653) qui est rappelée par le ressort de torsion (64) pour faire saillie vers l'extérieur à partir du corps de poignée (651), et qui peut être enfoncée afin de libérer le premier bras oscillant (63') de l'élément formant crochet (63) à partir de l'élément de mise en prise (61),
dans lequel l'élément formant crochet (63) a un premier bras oscillant (63'), un second bras oscillant (63"), et une partie de pivotement (630) formée en un seul bloc avec les premier et second bras oscillants (63', 63"), et reliée de manière pivotante au demi-module arrière (R), l'unité de retenue (6) comportant en outre un ressort de torsion (64) pour rappeler le premier bras oscillant (63') de l'élément formant crochet (63) pour venir en prise avec l'élément de mise en prise (61), et un câble de commande (66) ayant deux extrémités qui sont fixées respectivement au second bras oscillant (63") de l'élément formant crochet (63) et à l'unité formant poignée (65),
dans lequel le câble de commande (66) comporte une partie de câble extérieure tubulaire (661) et une partie de câble intérieure (662) s'étendant à travers la partie extérieure de câble (661), et disposée de manière mobile dans celle-ci, la partie extérieure de câble (661) ayant deux extrémités qui sont fixées respectivement sur la tige verticale arrière (221) et le corps de poignée (651), la partie de câble intérieure (662) ayant deux extrémités qui sont fixées respectivement sur le second bras oscillant (63") de l'élément formant crochet (63) et l'élément de commande (652).

2. Véhicule entraîné par moteur de type modulaire selon la revendication 1, **caractérisé en ce que** le châssis de véhicule avant (21) comporte une tige verticale avant fixe (211) qui s'étend vers le haut à travers la caisse de carrosserie de véhicule avant (31), et qui a une extrémité supérieure qui supporte le siège (4) sur celle-ci, et le châssis de véhicule arrière (22) comporte une tige verticale arrière fixe (221), l'élément de mise en prise (61) étant relié de manière fixe à la tige verticale avant (211), l'élément formant crochet (63) étant relié de manière rotative à la tige verticale arrière (221).

3. Véhicule entraîné par moteur de type modulaire selon la revendication 2, comportant en outre un boulon d'ajustement (224) qui est disposé de manière rotative sur la tige verticale arrière (221), et qui est ajustable pour appuyer contre la tige verticale avant (211).

4. Véhicule entraîné par moteur de type modulaire selon la revendication 1, **caractérisé en outre en ce que** le châssis de véhicule avant (21) comporte une tige verticale avant fixe (211) qui s'étend vers le haut à travers la caisse de carrosserie de véhicule avant (31), et qui a une extrémité supérieure qui supporte le siège (4) sur celle-ci, et le châssis de véhicule arrière (22) comporte une tige verticale arrière fixe (221), l'élément de mise en prise (61) comportant une plaque horizontale (611) reliée de manière fixe à la tige verticale avant (211), et une tige en forme de L (612), la tige en forme de L (612) ayant une partie de tige verticale (613) reliée de manière fixe à la plaque horizontale (611) au niveau d'une extrémité supérieure de celle-ci, et une partie de tige horizontale (614) s'étendant en un seul bloc à partir d'une extrémité inférieure de la partie de tige verticale (613), le premier bras oscillant (63') de l'élément formant crochet (63) ayant une partie de plaque inclinée (631) qui s'étend vers l'avant et vers le bas à partir de la partie de pivotement (630) dans un espace entre la plaque horizontale (611) et la partie de tige horizontale (614) de la tige en forme de L (612), et une partie d'insertion (632) qui s'étend en un seul bloc et vers le bas à partir d'une extrémité inférieure de la partie de plaque inclinée (631) et qui est rappelée pour s'étendre dans un espace de limite entre la partie de tige horizontale (614) de l'élément de mise en prise (61) et la tige verticale avant (211) afin d'empêcher un enlèvement vers l'arrière du demi-module arrière (R) à partir du demi-module avant (F).

5. Véhicule entraîné par moteur de type modulaire selon la revendication 4, **caractérisé en outre en ce que** la partie de tige horizontale (614) de la tige en forme de L (612) de l'élément de mise en prise (61) a une surface d'extrémité qui a une partie de surface de guidage inclinée (615), la partie de plaque inclinée (631) de l'élément formant crochet (63) ayant un côté de mise en prise incliné (633) qui est rappelé pour venir en prise avec la partie de surface de guidage inclinée (615) de la partie de tige horizontale (614), de sorte que la partie de surface de guidage inclinée (615) guide la partie d'insertion (632) de l'élément formant crochet (63) dans l'espace limitant pendant l'assemblage.

6. Véhicule entraîné par moteur de type modulaire selon la revendication 1, **caractérisé en ce que** l'unité de positionnement comporte :
deux bandes de guidage verticales allongées (222) s'étendant respectivement et vers l'avant à partir des côtés gauche et droit du châssis de véhicule arrière et reliées de manière fixe à ceux-ci (22), chacune des bandes de guidage (222) ayant un côté supérieur qui est formé avec une encoche (223), et
deux saillies de positionnement (212) s'étendant respectivement et vers l'extérieur à partir des côtés gauche et droit du châssis de véhicule avant (21) loin l'une de l'autre, et à travers les encoches (223) dans les bandes de guidage (222).

7. Véhicule entraîné par moteur de type modulaire selon la revendication 1, **caractérisé en ce que** la caisse de carrosserie de véhicule avant (31) est formée avec une préhension fixe (33).
